# EUROPÄISCHE PATENTSCHRIFT

(11) **EP 2 773 540 B1**
(45) Veröffentlichungstag und Bekanntmachung des Hinweises auf die Patenterteilung: **30.11.2016**
(21) Anmeldenummer: 12778118.5
(22) Anmeldetag: 25.10.2012
(51) Int. Cl.: B60S 3/04

(54) **VERFAHREN UND VORRICHTUNG ZUM WASCHEN EINES FAHRZEUGES**
METHOD AND DEVICE FOR WASHING A VEHICLE
PROCÉDÉ ET DISPOSITIF DE LAVAGE D'UN VÉHICULE

(30) Priorität: 02.11.2011 DE 102011054987
(43) Veröffentlichungstag der Anmeldung: 10.09.2014
(73) Patentinhaber: Alfred Kärcher GmbH & Co. KG, 71364 Winnenden (DE)
(72) Erfinder: SCHICK, Ralf, 71549 Auenwald (DE)
(74) Vertreter: Hoeger, Stellrecht & Partner Patentanwälte mbB
(86) Internationale Anmeldenummer: PCT/EP2012/071176
(87) Internationale Veröffentlichungsnummer: WO 2013/064423

(56) Entgegenhaltungen:
- US-A- 3 687 156
- US-A- 4 289 276
- US-A- 6 125 860
- US-A1- 2005 241 685

## Beschreibung

Die Erfindung betrifft ein Verfahren zum Waschen eines Fahrzeuges mit den Merkmalen des Oberbegriffes von Patentanspruch 1.

Außerdem betrifft die Erfindung eine Fahrzeugwaschvorrichtung zur Durchführung des voranstehend genannten Verfahrens mit den Merkmalen des Oberbegriffes von Patentanspruch 3.

Zum Waschen eines Fahrzeuges sind Selbstbedienungs-Fahrzeugwaschvorrichtungen bekannt, bei denen der Benutzer eine unter Druck stehende Waschflüssigkeit auf die Fahrzeugkarosserie aufbringen kann. Hierzu wird dem Benutzer ein Waschwerkzeug mit einer Auslassdüse zur Verfügung gestellt, das mit einer Hochdruckpumpe in Strömungsverbindung steht. Zum Waschen der Fahrzeugfelgen wird dem Benutzer von einer Reinigungsmittelbereitstellungseinrichtung ein Felgenreinigungsmittel bereitgestellt, das er auf die Felgen aufsprühen kann. Die Fahrzeugwaschvorrichtung umfasst üblicherweise eine Steuereinrichtung, die mit der Hochdruckpumpe und der Reinigungsmittelbereitstellungseinrichtung signalleitend verbunden ist. Der Benutzer kann an der Steuereinrichtung ein gewünschtes Waschprogramm auswählen. Beispielsweise kann er in einem ersten Schritt ein Karosseriewaschprogramm wählen, so dass er mittels des Waschwerkzeuges die unter Druck stehende Waschflüssigkeit auf die Fahrzeugkarosserie aufsprühen kann, und in einem zweiten Schritt kann er ein Felgenwaschprogramm auswählen, um das Felgenreinigungsmittel auf die Felgen zu sprühen.

Üblicherweise werden dem Benutzer zum Ausbringen der Waschflüssigkeit und des Felgenreinigungsmittels zwei verschiedene Waschwerkzeuge zur Verfügung gestellt, beispielsweise zwei verschiedene Reinigungslanzen, die jeweils eine Auslassdüse aufweisen. Die beiden Waschwerkzeuge werden über separate Zuführleitungen und separate Deckenkreisel mit der Waschflüssigkeit bzw. mit dem Felgenreinigungsmittel versorgt. Dies erschwert die Handhabung der Fahrzeugwaschvorrichtung und erschwert die Durchführung des Waschverfahrens.

Aus dem Dokument US 4,289,276 A sind ein Verfahren und eine Fahrzeugwaschvorrichtung zum Waschen eines Fahrzeuges bekannt, wobei das Fahrzeug über eine Auslassdüse mit einem unter Druck stehenden Gemisch aus Wasser und alkalischem Reinigungsmittel besprüht wird. Gleichzeitig mit dem Gemisch aus Wasser und Reinigungsmittel kann der Auslassdüse über eine separate Druckluftleitung Druckluft zugeführt werden, um das Gemisch aus Wasser und Reinigungsmittel zu zerstäuben.

Aus dem Dokument US 3,687,156 A sind ein Verfahren und eine Fahrzeugwaschvorrichtung bekannt, bei dem einer Schlauchtrommel mit aufgewickeltem Schlauch, der an seinem freien Ende eine Auslassdüse trägt, unter Druck stehendes Wasser über eine Versorgungsleitung zugeführt werden kann. In die Versorgungsleitung mündet eine Zufuhrleitung, über die dem Wasser ein Reinigungsmittel beigemischt werden kann. Über eine separate Druckluftleitung kann dem Schlauch auch Druckluft zugeführt werden, die über den Schlauch und die Auslassdüse ausgebracht werden kann.

Aus der Veröffentlichung US 2005/241685 A1 ist eine Selbstbedienungswaschanlage für Fahrzeuge bekannt, bei der über eine Auslassdüse alternativ Wasser, dem ein Reinigungsmittel beigemischt sein kann, oder Druckluft auf das zu reinigende Fahrzeug gerichtet werden können.

Aufgabe der Erfindung ist es, das eingangs genannte Verfahren zu vereinfachen und die eingangs genannte Fahrzeugwaschvorrichtung derart weiterzubilden, dass sie eine einfachere Handhabung aufweist.

Diese Aufgabe wird bei einem Verfahren der gattungsgemäßen Art erfindungsgemäß durch die Merkmale von Patentanspruch 1 gelöst.

Beim erfindungsgemäßen Verfahren kommt für das Ausbringen des Felgenreinigungsmittels dasselbe Waschwerkzeug zum Einsatz, mit dem auch die unter Druck stehende Waschflüssigkeit auf das Fahrzeug gesprüht wird. Verwendet wird ein alkalisches Felgenreinigungsmittel, das heißt eine alkalische Felgenreinigungslösung. Derartige alkalische Felgenreinigungsmittel sind dem Fachmann an sich bekannt. Erfindungsgemäß wurde erkannt, dass ein alkalisches Felgenreinigungsmittel mit Hilfe eines Waschwerkzeuges auf die Fahrzeugfelgen gerichtet werden kann, das auch zum Besprühen der Fahrzeugkarosserie mit unter Druck stehender Waschflüssigkeit zum Einsatz kommt.

Beim erfindungsgemäßen Verfahren wird dem alkalischen Felgenreinigungsmittel Druckluft beigemischt. Die Beimischung der Druckluft hat zur Folge, dass sich ein Felgenreinigungsschaum ausbildet in Form eines Gemisches aus alkalischem Felgenreinigungsmittel und Luft. Die Ausbringung des Felgenreinigungsschaums hat eine besonders wirkungsvolle Reinigung der Felgen zur Folge, wobei der Verbrauch an Felgenreinigungsmittel gering gehalten werden kann. Beispielsweise kann einem Gemisch aus Felgenreinigungschemikalie und Wasser Druckluft beigemischt werden. Das Gemisch aus Druckluft, Wasser und alkalischer Felgenreinigungschemikalie kann über die Auslassdüse des Waschwerkzeuges auf die Felgen des Fahrzeuges aufgebracht werden, über die im Falle einer Karosseriewäsche auch unter Druck stehende Waschflüssigkeit auf die Karosserie aufgebracht wird.

Erfindungsgemäß wird das Waschwerkzeug über eine Schlauchleitung an einen Deckenkreisel angeschlossen, der über eine Leitungsanordnung mit einer Hochdruckpumpe verbunden wird, wobei das alkalische Felgenreinigungsmittel stromaufwärts des Deckenkreisels in die Leitungsanordnung eingespeist wird. Der Einsatz von Deckenkreiseln ist insbesondere bei Selbstbedienungs-Fahrzeugwaschvorrichtungen dem Fachmann beispielsweise aus der Veröffentlichung US 6,125,860 an sich bekannt. Ein Deckenkreisel kann oberhalb des zu reinigenden Fahrzeuges positioniert sein. Er dient der drehbaren Lagerung einer Schlauchleitung, die mit ihrem freien Ende an das Waschwerkzeug, beispielsweise eine Reinigungslanze, angeschlossen ist. Das Waschwerkzeug kann dann zusammen mit der Schlauchleitung um eine vertikal ausgerichtete Drehachse um 360° gedreht werden. Dies erleichtert das Besprühen der Fahrzeugkarosserie und der Fahrzeugfelgen mit Waschflüssigkeit bzw. mit dem alkalischen Felgenreinigungsmittel. Das Felgenreinigungsmittel wird bevorzugt stromaufwärts des Deckenkreisels der Leitungsanordnung zugeführt, über die der Deckenkreisel mit der Hochdruckpumpe in Strömungsverbindung steht.

Gemäß der Erfindung durchströmt das stromaufwärts des Deckenkreisels in die Leitungsanordnung eingespeiste Felgenreinigungsmittel bis zum Deckenkreisel einen Leitungsabschnitt der Leitungsanordnung, dessen Länge maximal zwei Meter beträgt. Bevorzugt beträgt die Länge des Leitungsabschnitts maximal ein Meter, insbesondere maximal 0,5 Meter. Ein möglichst kurzer Leitungsabschnitt der Leitungsanordnung, der vom Felgenreinigungsmittel durchströmt wird, hat den Vorteil, dass das Felgenreinigungsmittel nur einen sehr kurzen Strömungsweg in der Leitungsanordnung zurücklegen muss, über die das Waschwerkzeug mit der Hochdruckpumpe verbunden ist. Dies bewirkt, dass bereits nach sehr kurzer Zeit das alkalische Felgenreinigungsmittel über die Auslassdüse des Waschwerkzeugs ausgebracht werden kann, nachdem der Benutzer durch Wahl des entsprechenden Felgenwaschprogramms das Ausbringen von Felgenreinigungsmittel in Gang gesetzt hat. Somit weist das Verfahren sehr kurze Umschaltzeiten auf, um nach dem Ausbringen von unter Druck stehender Waschflüssigkeit ein Felgenreinigungsmittel auf die Felgen des Fahrzeuges aufbringen zu können.

Die Durchführung des erfindungsgemäßen Verfahrens ist insbesondere für den Benutzer einer Selbstbedienungs-Fahrzeugwaschanlage sehr einfach. Er kann in einem ersten Schritt ein Karosseriewaschprogramm auswählen und die unter Druck stehende Waschflüssigkeit mit dem Waschwerkzeug auf die Karosserie sprühen. Die Waschflüssigkeit wird von einer Hochdruckpumpe unter Druck gesetzt, vorzugsweise unter einen Druck von 80 bar bis 120 bar, insbesondere 100 bar. Als Waschwerkzeug kommt vorzugsweise eine Reinigungslanze zum Einsatz. Anschließend kann der Kunde zum Reinigen der Felgen ein Felgenwaschprogramm auswählen, so dass dann ein alkalisches Felgenreinigungsmittel der Auslassdüse des Waschwerkzeuges zugeführt wird, ohne dass der Kunde das Waschwerkzeug wechseln muss. Das alkalische Felgenreinigungsmittel wird von einer Reinigungsmittelbereitstellungseinrichtung bereitgestellt, beispielsweise unter einem Druck von 2 bar bis 11 bar, insbesondere etwa 6 bar. Dem alkalischen Felgenreinigungsmittel kann auch Waschflüssigkeit, vorzugsweise Wasser, von der Hochdruckpumpe zugesetzt werden. Hierbei kann die Förderleistung der Hochdruckpumpe reduziert werden, beispielsweise auf 10 % bis 20 % der maximalen Förderleistung. Das Ausbringen des alkalischen Felgenreinigungsmittels allein mit Hilfe der Hochdruckpumpe ohne Einsatz der separaten Reinigungsmittelbereitstellungseinrichtung ist von Nachteil, da das alkalische Felgenreinigungsmittel sehr aggressiv ist und die Hochdruckpumpe durch das aggressive Felgenreinigungsmittel Schaden nehmen könnte. Von besonderem Vorteil ist es daher, wenn das Felgenreinigungsmittel ohne den Einsatz der Hochdruckpumpe ausgebracht wird.

Das alkalische Felgenreinigungsmittel kann beispielsweise in Form einer wässrigen Lösung einer alkalischen Felgenreinigungschemikalie ausgestaltet sein. Hierzu kann die alkalische Felgenreinigungschemikalie mit Frischwasser vermischt werden. Die Konzentration der Felgenreinigungschemikalie in der wässrigen Lösung beträgt bevorzugt 8 % bis 10 %, insbesondere 9 %.

Als Waschflüssigkeit kommt vorzugsweise Wasser oder eine wässerige Seifenlösung zum Einsatz. Die Seifenkonzentration kann beispielsweise 0,5 % betragen.

Von Vorteil ist es, wenn das alkalische Felgenreinigungsmittel in der gleichen Weise über die Auslassdüse des Waschwerkzeuges ausgebracht wird wie auch die unter Druck stehende Waschflüssigkeit. Der Kunde muss also am Waschwerkzeug und insbesondere an der Auslassdüse keine Veränderung vornehmen, wenn er statt der Waschflüssigkeit das alkalische Felgenreinigungsmittel ausbringen möchte. Dies hat eine weitere Vereinfachung des Verfahrens zur Folge.

Als Auslassdüse kommt vorzugsweise eine Flachstrahldüse zum Einsatz.

Die Auslassdüse kann einen elliptischen Querschnitt aufweisen.

Bei einer Fahrzeugwaschvorrichtung des eingangs genannten Art wird die voranstehend erläuterte Aufgabe erfindungsgemäß durch die Merkmale von Patentanspruch 3 gelöst.

Bei der erfindungsgemäßen Fahrzeugwaschvorrichtung kommt somit ein Waschwerkzeug zum Einsatz, mit dem sowohl eine unter Druck stehende Waschflüssigkeit auf die Fahrzeugkarosserie als auch ein alkalisches Felgenreinigungsmittel auf die Fahrzeugfelgen aufgebracht werden können. Die erfindungsgemäße Fahrzeugwaschvorrichtung zeichnet sich somit durch einen konstruktiv einfachen Aufbau und eine einfache Handhabung aus, wie dies voranstehend bereits erläutert wurde.

Die erfindungsgemäße Fahrzeugwaschvorrichtung weist eine Druckluftbereitstellungseinrichtung auf zum Herstellen eines Gemisches aus Druckluft und Felgenreinigungsmittel. Die Druckluft kann dem alkalischen Felgenreinigungsmittel beigemischt werden, so dass sich ein Felgenreinigungsschaum ausbildet, der über das Waschwerkzeug auf die Fahrzeugfelgen aufgebracht werden kann. Dies ermöglicht eine besonders wirkungsvolle Felgenreinigung. Darüber hinaus hat dies den Vorteil, dass der Verbrauch an Felgenreinigungsmittel besonders gering gehalten werden kann.

Das Waschwerkzeug steht über eine Leitungsanordnung mit der Hochdruckpumpe in Strömungsverbindung und eine Reinigungsmittelzuleitung mündet an einer ersten Mündungsstelle in die Leitungsanordnung, wobei die Reinigungsmittelzuleitung über ein von der Steuereinrichtung steuerbares Schließglied mit der Reinigungsmittelbereitstellungseinrichtung in Strömungsverbindung steht. Über die Leitungsanordnung kann der Auslassdüse des Waschwerkzeuges unter Druck stehende Waschflüssigkeit zugeführt werden, so dass diese über das Waschwerkzeug auf die Karosserie des Fahrzeuges gerichtet werden kann. Ein dem Waschwerkzeug zugewandter Endabschnitt der Leitungsanordnung dient günstigerweise auch der Zuführung des Felgenreinigungsmittels zum Waschwerkzeug. Hierzu mündet in die Leitungsanordnung eine Reinigungsmittelzuleitung, die über ein Schließglied mit der Reinigungsmittelbereitstellungseinrichtung in Strömungsverbindung steht. Das Schließglied ist von der Steuereinrichtung der Fahrzeugwaschvorrichtung steuerbar. Soll vom Waschwerkzeug unter Druck stehende Waschflüssigkeit ausgebracht werden, so kann das Schließglied von der Steuereinrichtung derart gesteuert werden, dass es seine Schließstellung einnimmt und dadurch die Strömungsverbindung zwischen der Leitungsanordnung und der Reinigungsmittelbereitstellungseinrichtung unterbricht. Soll das Felgenreinigungsmittel über das Waschwerkzeug ausgebracht werden, so kann das Schließglied von der Steuereinrichtung derart angesteuert werden, dass es seine Offenstellung einnimmt und dadurch eine Strömungsverbindung von der Reinigungsmittelbereitstellungseinrichtung über die Reinigungsmittelzuleitung zur Leitungsanordnung freigibt.

Die Leitungsanordnung weist einen Deckenkreisel auf. Die erste Mündungsstelle ist stromaufwärts des Deckenkreisels angeordnet. Das Felgenreinigungsmittel wird somit stromaufwärts des Deckenkreisels in die Leitungsanordnung eingespeist und kann ebenso wie die unter Druck stehende Waschflüssigkeit über den Deckenkreisel dem Waschwerkzeug zugeführt werden.

Die erste Mündungsstelle, an der die Reinigungsmittelzuleitung in die Leitungsanordnung einmündet, steht über einen Leitungsabschnitt der Leitungsanordnung mit dem Deckenkreisel in Strömungsverbindung. Die Länge des Leitungsabschnitts beträgt maximal zwei Meter, insbesondere maximal ein Meter, beispielsweise 0,5 Meter. Je kürzer die Länge des Leitungsabschnitts ist, die sich von der ersten Mündungsstelle bis zum Deckenkreisel erstreckt, desto kürzer ist der Bereich der Leitungsanordnung, der sowohl von der Waschflüssigkeit auch von dem Felgenreinigungsmittel durchströmt wird. Ein möglichst kurzer Leitungsabschnitt stellt sicher, dass nach einem vorherigen Ausbringen von Waschflüssigkeit innerhalb einer kurzen Umschaltzeit das Felgenreinigungsmittel über die Auslassdüse des Waschwerkzeuges ausgebracht werden kann. Wechselt der Benutzer von einem Karosseriewaschprogramm zu einem Felgenwaschprogramm, so wird dem Waschwerkzeug, beispielsweise der Reinigungslanze, innerhalb sehr kurzer Zeit das alkalische Felgenreinigungsmittel zur Verfügung gestellt, das vom Benutzer auf die Fahrzeugfelgen gerichtet werden kann. Die Umschaltzeit beträgt bevorzugt maximal 20 Sekunden, insbesondere maximal 15 Sekunden, beispielsweise 13 Sekunden.

Die Steuereinrichtung der erfindungsgemäßen Fahrzeugwaschvorrichtung ist günstigerweise programmierbar, so dass ein Kunde wahlweise ein Karosseriewaschprogramm oder ein Felgenwaschprogramm auswählen kann. Für beide Waschprogramme kann er dasselbe Waschwerkzeug verwenden, über dessen Auslassdüse die Waschflüssigkeit und auch das alkalische Felgenreinigungsmittel ausgebracht werden können.

Günstigerweise ist das alkalische Felgenreinigungsmittel in der gleichen Weise über die Auslassdüse des Waschwerkzeuges ausbringbar wie die unter Druck gesetzte Waschflüssigkeit. Es ist somit nicht erforderlich, dass der Kunde eine Änderung am Waschwerkzeug und insbesondere an dessen Auslassdüse vornimmt, wenn er mittels des Waschwerkzeuges statt unter Druck stehender Waschflüssigkeit das Felgenreinigungsmittel ausbringen möchte.

Günstig ist es, wenn das Schließglied in Abhängigkeit vom Betriebszustand der Hochdruckpumpe steuerbar ist. Dies ermöglicht es beispielsweise, das Schließglied zu öffnen, wenn die Hochdruckpumpe ausgeschaltet ist, und das Schließglied zu schließen, wenn die Hochdruckpumpe eingeschaltet ist. Dadurch kann dem Waschwerkzeug alternativ entweder unter Druck stehende Waschflüssigkeit von der Hochdruckpumpe oder aber das alkalische Felgenreinigungsmittel von der Reinigungsmittelbereitstellungseinrichtung zugeführt werden. Zur Durchführung eines Karosseriewaschprogramms wird die Hochdruckpumpe eingeschaltet und das Schließglied geschlossen, und zur Durchführung eines Felgenwaschprogramms wird die Hochdruckpumpe abgeschaltet und das Schließglied geöffnet.

Wie bereits erwähnt, mündet in die Leitungsanordnung an einer ersten Mündungsstelle eine Reinigungsmittelzuleitung ein. Günstig ist es, wenn stromaufwärts der ersten Mündungsstelle in die Leitungsanordnung ein erstes Rückschlagventil und in die Reinigungsmittelzuleitung ein zweites Rückschlagventil geschaltet ist. Das stromaufwärts der ersten Mündungsstelle in die Reinigungsmittelzuleitung geschaltete Rückschlagventil stellt sicher, dass von der Hochdruckpumpe keine Waschflüssigkeit über die Reinigungsmittelzuleitung zur Reinigungsmittelbereitstellungseinrichtung strömen kann. In entsprechender Weise stellt das in die Leitungsanordnung stromaufwärts der ersten Mündungsstelle geschaltete Rückschlagventil sicher, dass bei der Zuführung des Felgenreinigungsmittels über die Reinigungsmittelzuleitung zum Waschwerkzeug kein Felgenreinigungsmittel zur Hochdruckpumpe strömen kann. Das in die Reinigungsmittelzuleitung geschaltete Rückschlagventil öffnet in Strömungsrichtung des Felgenreinigungsmittels und das in die Leitungsanordnung geschaltete Rückschlagventil öffnet in Strömungsrichtung der Waschflüssigkeit.

Von besonderem Vorteil ist es, wenn die Reinigungsmittelbereitstellungseinrichtung eine Anschlussleitung mit einem Frischwasseranschluss aufweist, wobei in die Anschlussleitung ein Mischglied geschaltet ist zum Beimischen einer alkalischen Felgenreinigungschemikalie in das Frischwasser. An den Frischwasseranschluss kann eine Wasserleitung angeschlossen werden, die mit einem Frischwassernetz in Strömungsverbindung steht. Das Frischwasser durchströmt die Anschlussleitung und das Mischglied. Mit Hilfe des Mischglieds wird dem Frischwasser eine alkalische Felgenreinigungschemikalie beigemischt. Das Gemisch aus Frischwasser und Felgenreinigungschemikalie kann dann über die Reinigungsmittelzuleitung dem Waschwerkzeug zugeführt werden.

Als Mischglied kann beispielsweise eine Dosierpumpe zum Einsatz kommen, deren Pumpeneinlass mit einem Chemikalienbehälter verbunden ist, in dem sich die alkalische Felgenreinigungschemikalie befindet.

Günstigerweise ist die Dosierpumpe pneumatisch angetrieben.

Alternativ kann vorgesehen sein, dass das Mischglied als Injektor ausgestaltet ist. Derartige Injektoren sind dem Fachmann an sich bekannt. Sie sind in Form von Düsen ausgestaltet, die sich in Strömungsrichtung zunächst verengen und sich anschließend wieder erweitern. Im Bereich des engsten Strömungsquerschnitts mündet in den Injektor eine Chemikalienleitung, über die die alkalische Felgenreinigungschemikalie dem Injektor zugeführt werden kann. Wird der Injektor von Frischwasser durchströmt, so wird die Felgenreinigungschemikalie in den Injektor eingesaugt und dem Frischwasser beigemischt.

Bei einer vorteilhaften Ausführungsform der erfindungsgemäßen Fahrzeugwaschvorrichtung umfasst die Reinigungsmittelbereitstellungseinrichtung einen Vorratsbehälter, in den die Anschlussleitung einmündet. Über die Anschlussleitung kann dem Vorratsbehälter ein Gemisch aus Frischwasser und alkalischer Felgenreinigungschemikalie zugeführt werden, das im Vorratsbehälter bevorratet wird.

Günstig ist es, wenn die Reinigungsmittelbereitstellungseinrichtung eine Pumpe aufweist, die eingangsseitig mit dem Vorratsbehälter und ausgangsseitig mit dem Waschwerkzeug in Strömungsverbindung steht. Zur Durchführung eines Felgenwaschprogramms kann die Pumpe aktiviert werden, so dass dann von der Pumpe ein Felgenreinigungsmittel in Form eines Gemisches aus Frischwasser und alkalischer Felgenreinigungschemikalie zum Waschwerkzeug gefördert werden kann. Der Einsatz der Pumpe ermöglicht einen besonders schnellen Druckaufbau der Felgenreinigungschemikalie. Dies hat eine weitere Verringerung der Umschaltzeit zur Folge, so dass nach dem Ausbringen von unter Druck stehender Waschflüssigkeit innerhalb sehr kurzer Zeit das Felgenreinigungsmittel über das Waschwerkzeug ausgebracht werden kann.

Bevorzugt weist die Druckluftbereitstellungseinrichtung eine Druckluftquelle auf, an die eine Druckluftzuleitung angeschlossen ist, wobei die Druckluftzuleitung an einer zweiten Mündungsstelle in eine Reinigungsmittelzuleitung einmündet, über die das Waschwerkzeug mit der Reinigungsmittelbereitstellungsseinrichtung in Strömungsverbindung steht. Als Druckluftquelle kommt vorzugsweise ein Druckluftkompressor zum Einsatz.

Bevorzugt ist stromaufwärts der zweiten Mündungsstelle in die Druckluftzuleitung ein drittes Rückschlagventil geschaltet und in die Reinigungsmittelzuleitung ist stromaufwärts der zweiten Mündungsstelle ein viertes Rückschlagventil geschaltet. Das dritte Rückschlagventil öffnet in Strömungsrichtung der Druckluft und das vierte Rückschlagventil öffnet in Strömungsrichtung des Felgenreinigungsmittels. Das dritte Rückschlagventil stellt sicher, dass das Felgenreinigungsmittel nicht über die Druckluftzuleitung zur Druckluftquelle gelangen kann, und das vierte Rückschlagventil stellt sicher, dass die Druckluft nicht über die Reinigungsmittelzuleitung zur Reinigungsmittelbereitstellungseinrichtung gelangen kann.

Günstigerweise ist in die Reinigungsmittelzuleitung stromaufwärts des vierten Rückschlagventils ein Drosselelement geschaltet. Das Drosselelement kann beispielsweise in Form eines Drosselventils ausgebildet sein. Mit Hilfe des Drosselelementes kann der in der Reinigungsmittelzuleitung stromabwärts des Drosselelements herrschende Druck des Felgenreinigungsmittels limitiert werden. Darüber hinaus ermöglicht das Drosselelement auch eine Beschränkung der Strömungsrate des Felgenreinigungsmittels.

Die Fahrzeugwaschvorrichtung kann mehrere Waschplätze aufweisen, an denen jeweils ein Fahrzeug gewaschen werden kann. Jedem Waschplatz kann eine Hochdruckpumpe zugeordnet sein zur Zuführung von unter Druck stehender Waschflüssigkeit und sämtlichen Waschplätzen kann von der Reinigungsmittelbereitstellungseinrichtung das alkalische Felgenreinigungsmittel zugeführt werden.

Der Druck des Felgenreinigungsmittels stromaufwärts des Drosselelementes kann bei einer Fahrzeugwaschvorrichtung mit 4 Waschplätzen beispielsweise maximal etwa 11 bar betragen.

Der Druck in der Druckluftzuleitung stromaufwärts der zweiten Mündungsstelle kann beispielsweise 2 bis 5 bar betragen, insbesondere 2,5 bar.

Die nachfolgende Beschreibung bevorzugter Ausführungsformen der Erfindung dient im Zusammenhang mit der Zeichnung der näheren Erläuterung. Es zeigen:
- Figur 1:: eine schematische Darstellung einer ersten Ausführungsform einer erfindungsgemäßen Fahrzeugwaschvorrichtung, und
- Figur 2:: eine schematische Darstellung einer zweiten Ausführungsform einer erfindungsgemäßen Fahrzeugwaschvorrichtung.

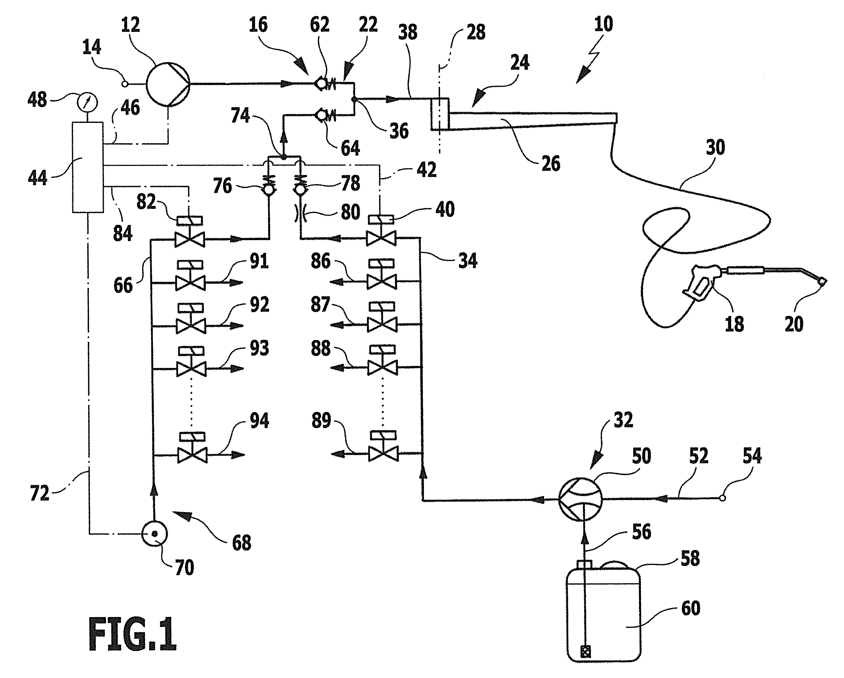

In Figur 1 ist schematisch eine insgesamt mit dem Bezugszeichen 10 belegte Fahrzeugwaschvorrichtung dargestellt. Die Fahrzeugwaschvorrichtung 10 umfasst eine Hochdruckpumpe 12, deren Pumpeneingang mit einem Versorgungsanschluss 14 in Strömungsverbindung steht. An den Versorgungsanschluss 14 kann eine Wasserleitung angeschlossen werden. Der Pumpenauslass steht über eine Leitungsanordnung 16 mit einem Waschwerkzeug in Strömungsverbindung, das im dargestellten Ausführungsbeispiel als Reinigungslanze 18 ausgestaltet ist. Die Reinigungslanze 18 umfasst eine Auslassdüse in Form einer Sprühdüse 20. Der Düsenquerschnitt der Sprühdüse 20 beträgt maximal 1 mm, insbesondere etwa 0,8 mm. Über die Leitungsanordnung 16 kann der Sprühdüse 20 eine unter Druck stehende Waschflüssigkeit, vorzugsweise Wasser oder eine wässerige Seifenlösung, zugeführt werden.

Die Leitungsanordnung 16 umfasst eine erste Versorgungsleitung 22, die an den Druckauslass der Hochdruckpumpe 12 angeschlossen ist und an die sich ein Deckenkreisel 24 anschließt mit einem Dreharm 26, der um eine vertikale Drehachse 28 frei drehbar ist. An den Dreharm 28 schließt sich eine Schlauchleitung 30 an. An das freie Ende der Schlauchleitung 30 ist die Reinigungslanze 18 angeschlossen.

Die Fahrzeugwaschvorrichtung 10 umfasst außerdem eine Reinigungsmittelbereitstellungseinrichtung 32, die ein alkalisches Felgenreinigungsmittel bereitstellt. Die Reinigungsmittelbereitstellungseinrichtung 32 steht über eine Reinigungsmittelzuleitung 34 mit der Leitungsanordnung 16 in Strömungsverbindung. Die Reinigungsmittelzuleitung 34 mündet an einer ersten Mündungsstelle 36 stromaufwärts des Deckenkreisels 24 in die Versorgungsleitung 22 der Leitungsanordnung 16. Zwischen der ersten Mündungsstelle 36 und dem Deckenkreisel 24 erstreckt sich ein Leitungsabschnitt 38 der Leitungsanordnung 16. Die Länge des Leitungsabschnitts 38 beträgt maximal zwei Meter, vorzugsweise beträgt die Länge des Leitungsabschnitts 38 maximal ein Meter, insbesondere maximal 0,5 Meter.

In die Reinigungsmittelzuleitung 34 ist ein steuerbares Schließglied in Form eines ersten Magnetventils 40 geschaltet, dessen Steuereingang über eine in der Zeichnung strichpunktiert dargestellte elektrische Steuerleitung 42 mit einer Steuereinrichtung 44 der Fahrzeugwaschvorrichtung 10 in elektrischer Verbindung steht. Über eine weitere elektrische Steuerleitung 46 steht die Hochdruckpumpe 12 mit der Steuereinrichtung 44 in elektrischer Verbindung.

Die Steuereinrichtung 44 umfasst einen Programmwahlschalter 48, der vom Benutzer der Fahrzeugwaschvorrichtung 10 betätigt werden kann. Die Steuereinrichtung 44 ist herstellerseitig und/oder vom Betreiber der Fahrzeugwaschvorrichtung 10 programmierbar, und mittels des Programmwahlschalters 48 hat der Benutzer der Fahrzeugwaschvorrichtung 10 die Möglichkeit, nacheinander verschiedene Waschprogramme auszuwählen.

Die Reinigungsmittelbereitstellungseinrichtung 32 weist ein Mischglied in Form eines Injektors 50 auf, der in eine Anschlussleitung 52 geschaltet ist, an die sich die Reinigungsmittelzuleitung 34 anschließt. Die Anschlussleitung 52 ist an einen Frischwasseranschluss 54 angeschlossen, über den die Anschlussleitung 52 mit Frischwasser versorgt werden kann.

In den Injektor 50 mündet eine Chemikalienleitung 56, die mit ihrem dem Injektor 50 abgewandten Ende in einen Chemikalienbehälter 58 eintaucht. Der Chemikalienbehälter 58 nimmt eine alkalische Felgenreinigungschemikalie 60 auf. Wird die Anschlussleitung 52 von Frischwasser durchströmt, so wird über die Chemikalienleitung 56 die alkalische Felgenreinigungschemikalie 60 in den Injektor 50 eingesaugt. Die Felgenreinigungschemikalie 60 wird somit dem Frischwasser beigemischt und ein Gemisch aus Frischwasser und Felgenreinigungschemikalie wird als Felgenreinigungsmittel über die Reinigungsmittelzuleitung 34, den Leitungsabschnitt 38 der Leitungsanordnung 16, den Deckenkreisel 24 und die Schlauchleitung 30 der Reinigungslanze 18 zugeführt.

Stromaufwärts der ersten Mündungsstelle 36 ist in die Versorgungsleitung 22 ein erstes Rückschlagventil 62 geschaltet, das in Strömungsrichtung der von der Hochdruckpumpe 12 unter Druck gesetzten Waschflüssigkeit öffnet. In die Reinigungsmittelzuleitung 34 ist stromaufwärts der ersten Mündungsstelle 36 ein zweites Rückschlagventil 64 geschaltet, das in Strömungsrichtung des Felgenreinigungsmittels öffnet.

Stromaufwärts des zweiten Rückschlagventils 64 mündet in die Reinigungsmittelzuleitung 34 eine Druckluftzuleitung 66, über die die Reinigungsmittelzuleitung 34 mit einer Druckluftbereitstellungseinrichtung 68 der Fahrzeugwaschvorrichtung 10 in Strömungsverbindung steht. Die Druckluftbereitstellungseinrichtung 68 umfasst eine Druckluftquelle in Form eines Druckluftkompressors 70, an dessen Auslass die Druckluftzuleitung 66 angeschlossen ist. Über eine elektrische Steuerleitung 72 kann der Druckluftkompressor 70 mit der Steuereinrichtung 44 in elektrischer Verbindung stehen.

Die Druckluftzuleitung 66 mündet an einer zweiten Mündungsstelle 74 stromaufwärts des zweiten Rückschlagventils 64 in die Reinigungsmittelzuleitung 34, so dass dem von der Reinigungsmittelbereitstellungseinrichtung 32 bereitgestellten Felgenreinigungsmittel, das die Reinigungsmittelzuleitung 34 durchströmt, Druckluft beigemischt werden kann, die vom Druckluftkompressor 70 bereitgestellt wird. Dies hat zur Folge, dass sich stromabwärts der zweiten Mündungsstelle 74 ein Felgenreinigungsschaum ausbildet, der über den Leitungsabschnitt 38, den Deckenkreisel 24 und die Schlauchleitung 30 der Reinigungslanze 18 zugeführt werden kann.

Stromaufwärts der zweiten Mündungsstelle 74 ist in die Druckluftzuleitung 66 ein drittes Rückschlagventil 76 geschaltet, das in Strömungsrichtung der Druckluft öffnet. In die Reinigungsmittelzuleitung 34 ist stromaufwärts der zweiten Mündungsstelle 74 ein viertes Rückschlagventil 78 geschaltet, das in Strömungsrichtung des Felgenreinigungsmittels öffnet. Im Bereich zwischen dem vierten Rückschlagventil 78 und dem ersten Magnetventil 40 ist in die Reinigungsmittelzuleitung 34 ein Drosselelement 80 geschaltet, mit dessen Hilfe die Strömungsrate des Felgenreinigungsmittels begrenzt werden kann.

Stromaufwärts des dritten Rückschlagventils 76 ist in die Druckluftzuleitung 66 ein steuerbares Schließglied in Form eines zweiten Magnetventils 82 geschaltet. Das zweite Magnetventil 82 steht über eine elektrische Steuerleitung 84 mit der Steuereinrichtung 44 in elektrischer Verbindung.

Die beiden Magnetventile 40 und 82 werden von der Steuereinrichtung 44 in Abhängigkeit vom Betriebszustand der Hochdruckpumpe 12 geschaltet. Wählt ein Benutzer der Fahrzeugwaschvorrichtung 10 mittels des Programmwahlschalters 48 ein Karosseriewaschprogramm aus, so wird die Hochdruckpumpe 12 in Betrieb gesetzt und die beiden Magnetventile 40 und 82 werden geschlossen. Dies hat zur Folge, dass der Reinigungslanze 18 von der Hochdruckpumpe 12 über die Leitungsanordnung 16 eine unter Druck stehende Waschflüssigkeit, beispielsweise Wasser, zugeführt wird. Der Druck der Waschflüssigkeit beträgt hierbei z. B. 100 bar. Die Waschflüssigkeit kann über die Sprühdüse 20 der Reinigungslanze 18 auf die Karosserie eines zu waschenden Fahrzeuges gerichtet werden.

Wählt der Benutzer mittels des Programmwahlschalters 48 anschließend ein Felgenwaschprogramm aus, so wird die Hochdruckpumpe 12 abgeschaltet und die beiden Magnetventile 40 und 82 werden geöffnet. Dadurch kann das von der Reinigungsmittelbereitstellungseinrichtung 32 bereitgestellte alkalische Felgenreinigungsmittel in Form eines Gemisches aus Frischwasser und alkalischer Felgenreinigungschemikalie die Reinigungsmittelzuleitung 34 durchströmen, wobei an der zweiten Mündungsstelle 74 Druckluft beigemischt wird, so dass sich stromabwärts der zweiten Mündungsstelle 74 ein Felgenreinigungsschaum ausbildet, der über den Leitungsabschnitt 38, den Deckenkreisel 24 und die Schlauchleitung 30 der Reinigungslanze 18 zugeführt wird und über die Sprühdüse 20 auf die Felgen des zu reinigenden Fahrzeuges gerichtet werden kann.

Die Reinigungslanze 18 kommt somit sowohl zum Ausbringen von unter Druck stehender Waschflüssigkeit als auch zum Ausbringen des alkalischen Felgenreinigungsmittels zum Einsatz. Änderungen an der Reinigungslanze und insbesondere an der Sprühdüse sind hierbei nicht erforderlich.

Wird von der Hochdruckpumpe 12 unter Druck stehende Waschflüssigkeit bereitgestellt, so kann diese die Versorgungsleitung 22 durchströmen. Es wird mittels des zweiten Rückschlagventils 64 sichergestellt, dass die unter Druck stehende Waschflüssigkeit nicht zur zweiten Mündungsstelle 74 und über diese zur Druckluftzuleitung 66 und zur Reinigungsmittelzuleitung 34 gelangen kann. Wird der Reinigungslanze 18 stattdessen ein Felgenreinigungsschaum zur Verfügung gestellt, so kann dieser das zweite Rückschlagventil 64 durchströmen. Das erste Rückschlagventil 62 stellt sicher, dass der Felgenreinigungsschaum nicht zur Hochdruckpumpe 12 gelangen kann.

Die Fahrzeugwaschvorrichtung 10 weist im dargestellten Ausführungsbeispiel mehrere Waschplätze auf, an denen jeweils ein zu reinigendes Fahrzeug positioniert werden kann. An jedem Waschplatz ist ein Deckenkreisel 24 angeordnet, der über eine Versorgungsleitung mit einer dem jeweiligen Waschplatz zugeordneten Hochdruckpumpe in Strömungsverbindung steht und der über eine Schlauchleitung mit der Reinigungslanze des Waschplatzes verbunden ist. Die Reinigungsmittelbereitstellungseinrichtung 32 ist ebenso wie die Druckluftbereitstellungseinrichtung 68 sämtlichen Waschplätzen zugeordnet, so dass sämtlichen Waschplätzen mittels der Reinigungsmittelbereitstellungseinrichtung 32 und der Druckluftbereitstellungseinrichtung 68 ein alkalisches Felgenreinigungsmittel bereitgestellt werden kann, dem Druckluft beigemischt ist, so dass sich ein Felgenreinigungsschaum ausbildet. Hierzu zweigen von der Reinigungsmittelzuleitung 34 stromaufwärts des Drosselelements 80 mehrere Zweigleitungen 86, 87, 88, 89 ab, in die jeweils ein separates steuerbares Schließglied in Form eines Magnetventils geschaltet ist, und von der Druckluftzuleitung 66 zweigen stromaufwärts des dritten Rückschlagventils 76 eine gleiche Anzahl von Zweigleitungen 91, 92, 93, 94 ab, in die jeweils ein zweites Magnetventil geschaltet ist. Sämtliche Magnetventile stehen über in der Zeichnung nicht dargestellte elektrische Steuerleitungen mit der Steuereinrichtung 44 der Fahrzeugwaschvorrichtung in elektrischer Verbindung. Jedem Waschplatz ist ein separater Programmwahlschalter zugeordnet, mit dessen Hilfe der Benutzer ein Waschprogramm auswählen kann. Somit kann der jeweiligen Reinigungslanze des Waschplatzes wahlweise von einer Hochdruckpumpe unter Druck gesetzte Waschflüssigkeit oder aber ein von der Reinigungsmittelbereitstellungseinrichtung 32 bereitgestelltes alkalisches Felgenreinigungsmittel, dem Druckluft beigemischt wird, zugeleitet werden.

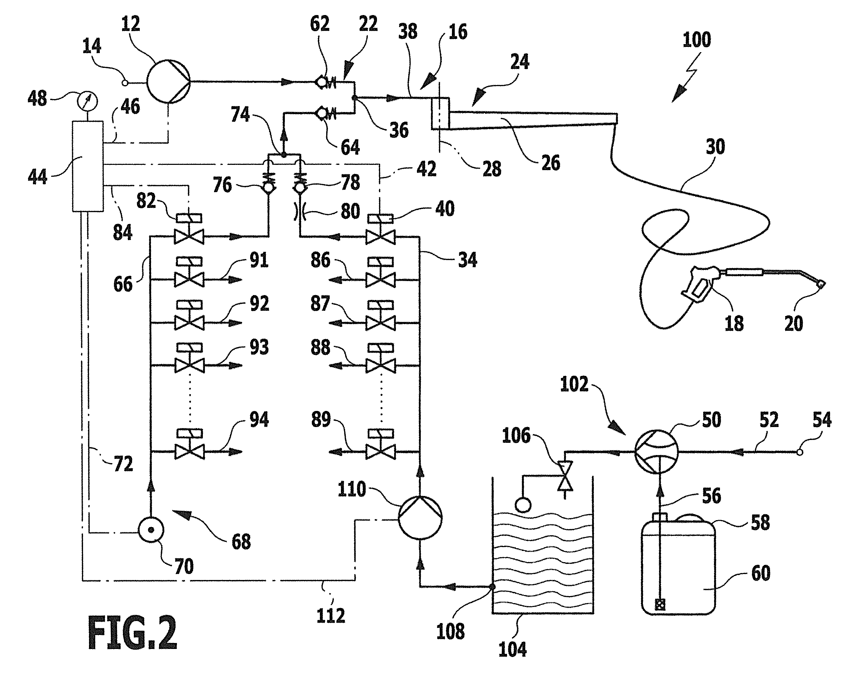

In Figur 2 ist eine zweite Ausführungsform einer erfindungsgemäßen Fahrzeugwaschvorrichtung dargestellt, die insgesamt mit dem Bezugszeichen 100 belegt ist. Die Fahrzeugwaschvorrichtung 100 ist weitgehend identisch ausgebildet wie die voranstehend unter Bezugnahme auf Figur 1 beschriebene Fahrzeugwaschvorrichtung 10. Für identische Bauteile werden daher in Figur 2 dieselben Bezugszeichen verwendet wie in Figur 1. Bezüglich dieser Bauteile wird zur Vermeidung von Wiederholungen auf die voranstehenden Erläuterungen Bezug genommen.

Von der in Figur 1 dargestellten Fahrzeugwaschvorrichtung 10 unterscheidet sich die in Figur 2 dargestellte Fahrzeugwaschvorrichtung 100 dadurch, dass eine Reinigungsmittelbereitstellungseinrichtung 102 zum Einsatz kommt, die nicht nur einen Injektor 50 aufweist, der in eine Anschlussleitung 52 geschaltet ist, so dass dem die Anschlussleitung 52 durchströmenden Frischwasser eine alkalische Felgenreinigungschemikalie 60 aus einem Chemikalienbehälter 58 beigemischt werden kann, sondern die Reinigungsmittelbereitstellungseinrichtung 102 umfasst darüber hinaus einen Vorratsbehälter 104, in den die Anschlussleitung 52 über ein vom Füllstand des Vorratsbehälters 104 abhängiges Einlassventil 106 einmündet. Im Vorratsbehälter 104 kann ein Gemisch aus Frischwasser und alkalischer Felgenreinigungschemikalie bevorratet werden. An einen Behälterauslass 108 des Vorratsbehälters 104 ist die Reinigungsmittelzuleitung 34 angeschlossen, wobei in die Reinigungsmittelzuleitung 34 stromaufwärts sämtlicher Zweigleitungen 91, 92, 93, 94 eine Pumpe 110 geschaltet ist. Mittels der Pumpe 110 kann aus dem Vorratsbehälter 104 das Gemisch aus Frischwasser und Felgenreinigungschemikalie gefördert und über die Reinigungsmittelzuleitung 34 der Leitungsanordnung 16 zugeführt werden. Die Pumpe 110 steht über eine elektrische Steuerleitung 112 mit der Steuereinrichtung 44 der Fahrzeugwaschvorrichtung 100 in elektrischer Verbindung.

Auch bei der in Figur 2 dargestellten Fahrzeugwaschvorrichtung 100 ist an jedem Waschplatz ein Deckenkreisel 24 angeordnet, an den eine Schlauchleitung 30 angeschlossen ist, die an ihrem freien Ende eine Reinigungslanze 18 mit einer Sprühdüse 20 trägt. Jeder Deckenkreisel 24 der Waschplätze steht über eine Versorgungsleitung 22 mit einer dem jeweiligen Waschplatz zugeordneten Hochdruckpumpe 12 in Strömungsverbindung, so dass jeder Reinigungslanze 18 bei Bedarf unter Druck gesetzte Waschflüssigkeit von der jeweiligen Hochdruckpumpe 12 bereitgestellt werden kann.

Auch bei der Fahrzeugwaschvorrichtung 100 ist jedem Waschplatz ein Programmwahlschalter 48 zugeordnet, mit dessen Hilfe der Benutzer ein Waschprogramm auswählen kann. Zum Besprühen der Fahrzeugkarosserie kann der Benutzer ein Karosseriewaschprogramm auswählen. Es wird dann der jeweiligen Reinigungslanze 18 die unter Druck gesetzte Waschflüssigkeit zugeführt, die der Benutzer auf die Fahrzeugkarosserie richten kann. Wählt der Benutzer stattdessen ein Felgenwaschprogramm aus, so wird die dem jeweiligen Waschplatz zugeordnete Hochdruckpumpe 12 abgeschaltet und stattdessen wird der Reinigungslanze ein alkalisches Felgenreinigungsmittel zugeführt in Form eines Gemisches aus Frischwasser, alkalischer Felgenreinigungschemikalie und Druckluft. Das alkalische Felgenreinigungsmittel kann mittels der Reinigungslanze in Form eines Felgenreinigungsschaums auf die zu reinigenden Felgen aufgebracht werden. Beim Wechsel von unter Druck gesetzter Waschflüssigkeit zu dem Felgenreinigungsmittel muss der Benutzer an der jeweiligen Reinigungslanze keinerlei Änderungen vornehmen.

Die Fahrzeugwaschvorrichtungen 10 und 100 zeichnen sich somit durch eine konstruktiv einfache Ausgestaltung aus sowie durch eine einfache Handhabung.

## Patentansprüche

1. Verfahren zum Waschen eines Fahrzeuges, wobei die Karosserie des Fahrzeuges über die Auslassdüse (20) eines Waschwerkzeuges (18) mit unter Druck stehender Waschflüssigkeit besprüht wird und wobei die Felgen des Fahrzeuges mit einem Felgenreinigungsmittel besprüht werden, und wobei dem Waschwerkzeug (18) wahlweise unter Druck stehende Waschflüssigkeit von einer Hochdruckpumpe (12) und/oder ein alkalisches Felgenreinigungsmittel von einer Reinigungsmittelbereitstellungseinrichtung (32, 102) zugeführt wird, **dadurch gekennzeichnet, dass** dem alkalischen Felgenreinigungsmittel Druckluft beigemischt wird, wobei das Waschwerkzeug (18) über eine Schlauchleitung (30) an einen Deckenkreisel (24) angeschlossen wird, der über eine Leitungsanordnung (16) mit der Hochdruckpumpe (12) verbunden wird, wobei das alkalische Felgenreinigungsmittel stromaufwärts des Deckenkreisels (24) in die Leitungsanordnung (16) eingespeist wird, und wobei das stromaufwärts des Deckenkreisels (24) in die Leitungsanordnung (16) eingespeiste Felgenreinigungsmittel einen Leitungsabschnitt (38) der Leitungsanordnung durchströmt, dessen Länge maximal zwei Meter beträgt.

2. Verfahren nach Anspruch 1, **dadurch gekennzeichnet, dass** das alkalische Felgenreinigungsmittel in der gleichen Weise wie die unter Druck stehende Waschflüssigkeit über die Auslassdüse (20) ausgebracht wird.

3. Fahrzeugwaschvorrichtung zur Durchführung des Verfahrens nach Anspruch 1 oder 2, mit einem eine Auslassdüse (20) aufweisenden Waschwerkzeug (18), das mit einer Hochdruckpumpe (12) in Strömungsverbindung steht zum Ausbringen einer unter Druck stehenden Waschflüssigkeit über die Auslassdüse (20), und mit einer Reinigungsmittelbereitstellungseinrichtung (32, 102) zum Bereitstellen eines Felgenreinigungsmittels, sowie mit einer Steuereinrichtung (44), die mit der Hochdruckpumpe (12) und mit der Reinigungsmittelbereitstellungseinrichtung (32, 102) signalleitend verbunden ist, wobei dem Waschwerkzeug (18) wahlweise Waschflüssigkeit von der Hochdruckpumpe (12) und/oder ein alkalisches Felgenreinigungsmittel von der Reinigungsmittelbereitstellungseinrichtung (32, 102) zuführbar ist zum Ausbringen der Waschflüssigkeit bzw. des Felgenreinigungsmittels über die Auslassdüse (20), **dadurch gekennzeichnet, dass** die Fahrzeugwaschvorrichtung (10, 100) eine Druckluftbereitstellungseinrichtung (68) aufweist zum Herstellen eines Gemisches aus Druckluft und Felgenreinigungsmittel, und dass das Waschwerkzeug (18) über eine Leitungsanordnung (16) mit der Hochdruckpumpe (12) in Strömungsverbindung steht, und dass an einer ersten Mündungsstelle (36) in die Leitungsanordnung (16) eine Reinigungsmittelzuleitung (34) einmündet, die über ein von der Steuereinrichtung (44) steuerbares Schließglied (40) mit der Reinigungsmittelbereitstellungseinrichtung (32, 102) in Strömungsverbindung steht, wobei die Leitungsanordnung (16) einen Deckenkreisel (26) aufweist und die erste Mündungsstelle (36) stromaufwärts des Deckenkreisels (24) angeordnet ist und über einen Leitungsabschnitt (38) mit dem Deckenkreisel (24) in Strömungsverbindung steht, wobei die Länge des Leitungsabschnitts (38) maximal zwei Meter beträgt.

4. Fahrzeugwaschvorrichtung nach Anspruch 3, **dadurch gekennzeichnet, dass** das Schließglied (40) in Abhängigkeit vom Betriebszustand der Hochdruckpumpe (12) steuerbar ist.

5. Fahrzeugwaschvorrichtung nach Anspruch 3 oder 4, **dadurch gekennzeichnet, dass** stromaufwärts der ersten Mündungsstelle (36) in die Leitungsanordnung ein erstes Rückschlagventil (62) und in die Reinigungsmittelzuleitung (34) ein zweites Rückschlagventil (64) geschaltet ist.

6. Fahrzeugwaschvorrichtung nach einem der Ansprüche 3 bis 5, **dadurch gekennzeichnet, dass** die Reinigungsmittelbereitstellungseinrichtung (32, 102) eine Anschlussleitung (52) aufweist mit einem Frischwasseranschluss (54), wobei in die Anschlussleitung (52) ein Mischglied geschaltet ist zum Beimischen einer alkalischen Felgenreinigungschemikalie (60) in das Frischwasser.

7. Fahrzeugwaschvorrichtung nach Anspruch 6, **dadurch gekennzeichnet, dass** das Mischglied als Injektor (50) ausgestaltet ist.

8. Fahrzeugwaschvorrichtung nach Anspruch 6 oder 7, **dadurch gekennzeichnet, dass** die Reinigungsmittelbereitstellungseinrichtung (102) einen Vorratsbehälter (104) umfasst, in den die Anschlussleitung (52) einmündet.

9. Fahrzeugwaschvorrichtung nach Anspruch 8, **dadurch gekennzeichnet, dass** die Reinigungsmittelbereitstellungseinrichtung (102) eine Pumpe (110) aufweist, die eingangsseitig mit dem Vorratsbehälter (104) und ausgangsseitig mit dem Waschwerkzeug (18) in Strömungsverbindung steht.

10. Fahrzeugwaschvorrichtung nach einem der Ansprüche 3 bis 9, **dadurch gekennzeichnet, dass** die Druckluftbereitstellungseinrichtung (68) eine Druckluftquelle (70) aufweist, an die eine Druckluftzuleitung (66) angeschlossen ist, wobei die Druckluftzuleitung (66) an einer zweiten Mündungsstelle (74) in eine Reinigungsmittelzuleitung (34) einmündet, über die dem Waschwerkzeug (18) das Felgenreinigungsmittel zuführbar ist.

11. Fahrzeugwaschvorrichtung nach Anspruch 10, **dadurch gekennzeichnet, dass** stromaufwärts der zweiten Mündungsstelle (74) in die Druckluftzuleitung (66) ein drittes Rückschlagventil (76) und in die Reinigungsmittelzuleitung (34) ein viertes Rückschlagventil (78) geschaltet ist.

12. Fahrzeugwaschvorrichtung nach Anspruch 11, **dadurch gekennzeichnet, dass** in die Reinigungsmittelzuleitung (34) stromaufwärts des vierten Rückschlagventils (78) ein Drosselelement (80) geschaltet ist.

## Claims

1. Method for washing a vehicle, wherein the body of the vehicle is sprayed with pressurized washing liquid via the outlet nozzle (20) of a washing tool (18) and the rims of the vehicle are sprayed with a rim cleaning agent, and wherein the washing tool (18) is selectively supplied with pressurized washing liquid by a high-pressure pump (12) and/or an alkaline rim cleaning agent by a cleaning agent supplying device (32, 102), **characterized in that** pressurized air is mixed with the alkaline rim cleaning agent, wherein the washing tool (18) is connected via a hose line (30) to a ceiling boom (24) which is connected via a line arrangement (16) to the high-pressure pump (12), wherein the alkaline rim cleaning agent is fed into the line arrangement (16) upstream of the ceiling boom (24), and wherein the rim cleaning agent fed into the line arrangement (16) upstream of the ceiling boom (24) flows through a line section (38) of the line arrangement, the length of the line section being at most two meters.

2. Method in accordance with claim 1, **characterized in that** the alkaline rim cleaning agent is discharged in the same way as the pressurized washing liquid via the outlet nozzle (20).

3. Vehicle washing apparatus for performing the method in accordance with claim 1 or 2, comprising a washing tool (18) having an outlet nozzle (20) and being in flow connection with a high-pressure pump (12) for discharging a pressurized washing liquid via the outlet nozzle (20), and comprising a cleaning agent supplying device (32, 102) for supplying a rim cleaning agent, and a control device (44) connected to the high-pressure pump (12) and to the cleaning agent supplying device (32, 102) in a signal-transmitting manner, washing liquid from the high-pressure pump (12) and/or an alkaline rim cleaning agent from the cleaning agent supplying device (32, 102) being selectively suppliable to the washing tool (18) for discharge of the washing liquid or the rim cleaning agent via the outlet nozzle (20), **characterized in that** the vehicle washing apparatus (10, 100) comprises a pressurized air supplying device (68) for producing a mixture of pressurized air and rim cleaning agent, and **in that** the washing tool (18) is in flow connection with the high-pressure pump (12) via a line arrangement (16), and **in that** a cleaning agent feed line (34) which is in flow connection with the cleaning agent supplying device (32, 102) via a closing element (40) controllable by the control device (44) opens at a first port (36) into the line arrangement (16), the line arrangement (16) comprising a ceiling boom (24), and the first port (36) being arranged upstream of the ceiling boom (24) and being in flow connection with the ceiling boom (24) via a line section (38), the length of the line section (38) being at most two meters.

4. Vehicle washing apparatus in accordance with claim 3, **characterized in that** the closing element (40) is controllable in dependence upon the operating state of the high-pressure pump (12).

5. Vehicle washing apparatus in accordance with claim 3 or 4, **characterized in that** upstream of the first port (36), a first check valve (62) is connected in the line arrangement and a second check valve (64) is connected in the cleaning agent feed line (34).

6. Vehicle washing apparatus in accordance with any one of claims 3 to 5, **characterized in that** the cleaning agent supplying device (32, 102) comprises a connecting line (52) with a fresh water connection (54), a mixing element being connected in the connecting line (52) for mixing an alkaline rim cleaning chemical (60) into the fresh water.

7. Vehicle washing apparatus in accordance with claim 6, **characterized in that** the mixing element is configured as injector (50).

8. Vehicle washing apparatus in accordance with claim 6 or 7, **characterized in that** the cleaning agent supplying device (102) comprises a storage container (104) into which the connecting line (52) opens.

9. Vehicle washing apparatus in accordance with claim 8, **characterized in that** the cleaning agent supplying device (102) comprises a pump (110) which is in flow connection at the inlet side with the storage container (104) and at the outlet side with the washing tool (18).

10. Vehicle washing apparatus in accordance with any one of claims 3 to 9, **characterized in that** the pressurized air supplying device (68) comprises a source of pressurized air (70) to which a pressurized air feed line (66) is connected, the pressurized air feed line (66) opening at a second port (74) into a cleaning agent feed line (34) via which the rim cleaning agent is suppliable to the washing tool (18).

11. Vehicle washing apparatus in accordance with claim 10, **characterized in that** upstream of the second port (74), a third check valve (76) is connected in the pressurized air feed line (66) and a fourth check valve (78) is connected in the cleaning agent feed line (34).

12. Vehicle washing apparatus in accordance with claim 11, **characterized in that** a throttle element (80) is connected in the cleaning agent feed line (34) upstream of the fourth check valve (78).

## Revendications

1. Procédé de lavage d'un véhicule, un liquide de lavage sous pression passant par la buse de sortie (20) d'un outil de lavage (18) étant pulvérisé sur la carrosserie du véhicule et un produit de nettoyage des jantes étant pulvérisé sur les jantes du véhicule, et l'outil de lavage (18) étant alimenté sélectivement en liquide de lavage sous pression provenant d'une pompe haute pression (12) et/ou en produit alcalin de nettoyage des jantes provenant d'un dispositif de fourniture du produit de nettoyage (32, 102), **caractérisé en ce que** de l'air comprimé est mélangé au produit alcalin de nettoyage des jantes, l'outil de lavage (18) étant raccordé par l'intermédiaire d'une conduite flexible (30) à un bras articulé à 360° (24), qui est relié à la pompe haute pression (12) par l'intermédiaire d'un ensemble de conduites (16), le produit alcalin de nettoyage des jantes étant injecté dans l'ensemble de conduites (16) en amont du bras articulé à 360° (24), et le produit de nettoyage des jantes injecté dans l'ensemble de conduites (16) en amont du bras articulé à 360° (24) traversant une section de conduite (38) de l'ensemble de conduites, dont la longueur atteint au maximum deux mètres.

2. Procédé selon la revendication 1, **caractérisé en ce que** le produit alcalin de nettoyage des jantes est émis en passant par la buse de sortie (20) de la même manière que le liquide de lavage sous pression.

3. Dispositif de lavage de véhicule destiné à mettre en oeuvre le procédé selon la revendication 1 ou 2, comprenant un outil de lavage (18) qui comporte une buse de sortie (20) et qui est en liaison fluidique avec une pompe haute pression (12) pour émettre un liquide de lavage sous pression passant par la buse de sortie (20), et comprenant un dispositif de fourniture de produit de nettoyage (32, 102) destiné à fournir un produit de nettoyage des jantes, ainsi qu'un dispositif de commande (44), qui est relié pour l'acheminement de signaux à la pompe haute pression (12) et au dispositif de fourniture de produit de nettoyage (32, 102), l'outil de lavage (18) pouvant être alimenté sélectivement en liquide de lavage par la pompe haute pression (12) et/ou en produit alcalin de nettoyage des jantes par le dispositif de fourniture de produit de nettoyage (32, 102) pour émettre le liquide de lavage ou le produit de nettoyage des jantes passant par la buse de sortie (20), **caractérisé en ce que** le dispositif de lavage de véhicule (10, 100) comprend un dispositif de fourniture d'air comprimé (68) pour produire un mélange d'air comprimé et de produit de nettoyage des jantes, et **en ce que** l'outil de lavage (18) est en liaison fluidique avec la pompe haute pression (12) par l'intermédiaire d'un ensemble de conduites (16), et **en ce qu'**en un premier point d'embouchure (36), une conduite d'alimentation en produit de nettoyage (34), qui est en liaison fluidique avec le dispositif de fourniture de produit de nettoyage (32, 102) par l'intermédiaire d'un organe de fermeture (40) pouvant être commandé par le dispositif de commande (44), débouche dans l'ensemble de conduites (16), l'ensemble de conduites (16) comprenant un bras articulé à 360° (24) et le premier point d'embouchure (36) étant agencé en amont du bras articulé à 360° (24) et étant en liaison fluidique avec le bras articulé à 360° (24) par l'intermédiaire d'une section de conduite (38), la longueur de la section de conduite (38) atteignant au maximum deux mètres.

4. Dispositif de lavage de véhicule selon la revendication 3, **caractérisé en ce que** l'organe de fermeture (40) peut être commandé en fonction de l'état de fonctionnement de la pompe haute pression (12).

5. Dispositif de lavage de véhicule selon la revendication 3 ou 4, **caractérisé en ce que**, en amont du premier point d'embouchure (36), un premier clapet anti-retour (62) est monté dans l'ensemble de conduites et un deuxième clapet anti-retour (64) est monté dans la conduite d'alimentation en produit de nettoyage (34).

6. Dispositif de lavage de véhicule selon l'une quelconque des revendications 3 à 5, **caractérisé en ce que** le dispositif de fourniture de produit de nettoyage (32, 102) comprend une conduite de raccordement (52) pourvue d'un raccord d'eau claire (54), un organe de mélange étant monté dans la conduite de raccordement (52) pour mélanger un produit chimique alcalin de nettoyage des jantes (60) dans l'eau claire.

7. Dispositif de lavage de véhicule selon la revendication 6, **caractérisé en ce que** l'organe de mélange est réalisé sous la forme d'un injecteur (50).

8. Dispositif de lavage de véhicule selon la revendication 6 ou 7, **caractérisé en ce que** le dispositif de fourniture de produit de nettoyage (102) comprend un contenant de stockage (104), dans lequel débouche la conduite de raccordement (52).

9. Dispositif de lavage de véhicule selon la revendication 8, **caractérisé en ce que** le dispositif de fourniture de produit de nettoyage (102) comprend une pompe (110) qui est en liaison fluidique côté entrée avec le contenant de stockage (104) et côté sortie avec l'outil de lavage (18).

10. Dispositif de lavage de véhicule selon l'une quelconque des revendications 3 à 9, **caractérisé en ce que** le dispositif de fourniture d'air comprimé (68) comprend une source d'air comprimé (70), à laquelle est raccordée une conduite d'alimentation en air comprimé (66), la conduite d'alimentation en air comprimé (66) débouchant au niveau d'un deuxième point d'embouchure (74) dans une conduite d'alimentation en produit de nettoyage (34) par l'intermédiaire de laquelle l'outil de lavage (18) peut être alimenté en produit de nettoyage pour les jantes.

11. Dispositif de lavage de véhicule selon la revendication 10, **caractérisé en ce que**, en amont du deuxième point d'embouchure (74), un troisième clapet anti-retour (76) est monté dans la conduite d'alimentation en air comprimé (66) et un quatrième clapet anti-retour (78) est monté dans la conduite d'alimentation en produit de nettoyage (34).

12. Dispositif de lavage de véhicule selon la revendication 11, **caractérisé en ce qu'**un élément d'étranglement (80) est monté dans la conduite d'alimentation en produit de nettoyage (34) en amont du quatrième clapet anti-retour (78).
